# EUROPÄISCHE PATENTSCHRIFT

(11) **EP 1 199 941 B1**
(45) Veröffentlichungstag und Bekanntmachung des Hinweises auf die Patenterteilung: **21.07.2004**
(21) Anmeldenummer: 00963998.0
(22) Anmeldetag: 03.08.2000
(51) Int. Cl.: A21C 11/16, A21C 3/08

(54) **DÜSENANORDNUNG, DÜSENTRÄGER UND VORRICHTUNG ZUM EXTRUDIEREN TEIGIGER MASSEN**
NOZZLE ARRANGEMENT, NOZZLE HOLDER AND DEVICE FOR EXTRUDING MATERIALS IN DOUGH FORM
ENSEMBLE FILIERE, PORTE-FILIERE ET DISPOSITIF POUR EXTRUDER DES MATIERES SOUS FORME DE PATE

(30) Priorität: 05.08.1999 DE 19936829
(43) Veröffentlichungstag der Anmeldung: 02.05.2002
(73) Patentinhaber: Hosokawa Bepex GmbH, 74211 Leingarten (DE)
(72) Erfinder: FUX, Günther, 74363 Güglingen (DE); ALTVATER, Frank, 74074 Heilbronn (DE)
(74) Vertreter: Goetz, Rupert, Dipl.-Ing.
(86) Internationale Anmeldenummer: PCT/EP2000/007554
(87) Internationale Veröffentlichungsnummer: WO 2001/010227

(56) Entgegenhaltungen:
- EP-A- 0 044 689
- EP-A- 0 876 896
- EP-A- 1 036 500
- WO-A-93/03909
- FR-A- 847 554
- US-A- 4 288 463
- US-A- 5 609 903

## Beschreibung

Die Erfindung betrifft einen Düsenträger mit einer Düsenanordnung gemäß dem oberbegriff des Anspruchs 1 und eine Vorrichtung zum Extrudieren teigiger Massen mit einem derartigen Düsenträger.

Backwaren, Teige und Süßwaren werden oftmals extrudiert, indem unter Druck gesetzte Masse durch eine Düsenanordnung zu einem Strang ausgepreßt wird. Der Strang kann als solcher durch ein Transportband abgeführt oder in kurze Abschnitte geteilt werden. Die äußere Gestalt des Strangs, insbesondere seine Umfangsgestalt, ist von der Düsenanordnung abhängig.

Aus EP-A-0 704 158 ist eine Düsenanordnung bekannt, die eine innere ortsfeste Düse sowie eine mittlere und eine äußere Düse aufweist, die koaxial angeordnet und von denen die beiden letztgenannten gemeinsam drehbar sind. Eine derartige Düsenanordnung dient zum Herstellen von Teigsträngen mit unterschiedlicher Querschnittsform, die je eine innere Füllung und zwei diese umschließende Teigschichten aufweisen.

Aus DE-A-452 211 ist eine Semmelflechtmaschine bekannt, bei der drei Flechtmundstücke zwischen zwei sich drehenden Treibern übergeben und dadurch auf einer 8-förmigen Bahn durcheinandergeflochten werden. Mit einer solchen Maschine kann keine Teigware hergestellt werden, die eine Füllung aufweist, denn die Füllung müßte im Übergabebereich der Flechtmundstücke zwischen den Treibern zugeführt werden.

Aus EP-A-0 168 255 und EP-A-0 177 175 A2 sind Vorrichtungen zum Co-Extrudieren zweier Massen bekannt, die eine innere Masse durch eine Düse und eine äußere Masse mit darin enthaltenen körnigen Partikeln durch einen die Düse umgebenden Trichter extrudieren, wobei die Massen zu einem Strang verbunden werden. Der Trichter weist an seiner Mündung scharfe Kanten auf, um zu erreichen, daß die körnigen Partikel in der äußeren Masse an die Oberfläche gelangen. Die Mündung des Trichters kann gezahnt ausgebildet sein, damit die Partikel auch aus der Oberfläche hervorstehen. Der Verbundstrang wird von einem Transportband abgeführt. Hierdurch läßt sich eine Backware aus zwei Massen herstellen, die geradlinige längliche Form hat und an der Oberfläche körnige Partikel aufweist.

Aus EP-A-0 202 143 ist ein Dreifach-Extruder bekannt, durch den eine innere Masse mit einer ersten äußeren Masse, und diese mit einer zweiten äußeren Masse ummantelt werden. Eine innere Düse wird durch einen mittleren Zuführkanal mit der inneren Masse gespeist. Eine äußere Düse umgibt die innere Düse und wird durch einen seitlichen Zuführkanal mit der ersten äußeren Masse gespeist. Ein Trichter umgibt die äußere Düse. Die zweite äußere Masse wird durch den Trichter zugeführt. Die äußere Düse und der Trichter bilden je einen Ringraum um die innere Düse. Diese Ringräume weisen im Längsschnitt eckige Form auf. Mit einem solchen Dreifach-Extruder läßt sich eine ebenfalls längliche äußerlich geradlinige Backware herstellen.

US-A-5,120,554 beschreibt einen freistehenden Düsenkopf zum Extrudieren einer Teigmasse. Der Düsenkopf hat am Umfang mehrere Düsenanordnungen. Die Düsenanordnungen sind von je einer Zweifachdüse gebildet, um gefüllte Backwaren herzustellen. Diese Zweifachdüsen haben je eine innere Düse, die durch einen einzelnen Zuführkanal gespeist wird, und je eine äußere Düse. Die äußeren Düsen werden über eine gemeinsame zylinderförmige Zuführkammer durch seitliche Kanäle gespeist. Der Düsenkopf ermöglicht das gleichzeitige Extrudieren mehrerer gefüllter gerader Stränge.

Aus US-A-5,518,749 und WO 97/25881 sind ein Verfahren und eine Vorrichtung zum Herstellen verdrillter Getreideprodukte bekannt. Ein Rotor, der sich durch eine Kammer erstreckt und in einer Öffnung der Kammer mündet, bildet eine innere Düse, durch die eine innere Masse zuführbar ist. Durch einen Seitenkanal ist eine zweite Masse in die Kammer zuführbar. Zwischen der Öffnung der Kammer und dem Rotor besteht ein Ringspalt, durch den die zweite Masse austreten kann. Der Ringspalt entspricht einer äußeren Düse. Dreht sich die innere Düse, so entsteht ein Erzeugnis mit einer verdrillten äußeren Masseschicht und einer Füllung. Dabei ist die Verdrillung der äußeren Masseschicht jedoch stark von den Eigenschaften der äußeren Masse, wie beispielsweise Fließverhalten und Zähigkeit, abhängig. Die extrudierten Getreideprodukte weisen daher nicht immer eine ausreichend gleichmäßige Form auf.

Aus der WO 93/03909 ist eine Düsenanordnung mit einer koaxial zu einer Drehachse angeordneten zentralen Düse zum Extrudieren einer inneren Masse bekannt. Zwei oder drei äußere Düsen zum Extrudieren einer äußeren Masse sind um die Drehachse drehbar und gegen die zentrale Düse achsversetzt angeordnet. Bei dieser bekannten Düsenanordnung wird allen äußeren Düsen die gleiche Extrusionsmasse zugeführt.

Aufgabe der Erfindung ist es, einen Düsenträger mit einer Düsenanordnung und eine Vorrichtung zum Extrudieren teigiger Massen vorzusehen, mit denen verdrillte oder gewendelte Backwaren und Süßwaren mit hoher Gewichts- und Formgenauigkeit herstellbar sind, bei denen um einen geradlinigen Mittelstrang verschiedene gewendelte Außenstränge ausgebildet sind.

Die Aufgabe ist erfindungsgemäß durch einen Düsenträger mit einer Düsenanordnung mit den Merkmalen des Anspruchs 1 gelöst. Demnach weist die Düsenanordnung eine koaxial zu einer Drehachse angeordnete innere Düse mit einer Mündung zum Extrudieren einer inneren Masse und zwei äußere Düsen auf, die um die Drehachse drehbar sind, mit je einer Mündung zum Extrudieren einer äußeren Masse. Die äußeren Düsen sind dabei gegen die innere Düse achsversetzt oder in einem Abstand von der inneren Düse angeordnet. Es ist vorteilhaft, wenn auch die innere Düse um die Drehachse drehbar ist. Der Düsenträger weist zwei gegeneinander drehbare Teile auf, nämlich einen Stator, in dem ein innerer Zuführkanal sowie ein erster und ein zweiter äußerer Zuführkanal ausgebildet sind, und einen Rotor, der die Düsen trägt, im Stator drehbar gelagert ist und einen ersten Verbindungskanal enthält, der den inneren Zuführkanal mit der inneren Düse verbindet. In mindestens einem der genannten gegeneinander drehbaren Teile sind ein erster Ringraum und im Rotor ein zweiter Verbindungskanal ausgebildet, die den ersten äußeren Zuführkanal mit der ersten äußeren Düse verbinden. Ferner ist ein zweiter Ringraum ausgebildet, der den zweiten äußeren Zuführkanal mit der zweiten äußeren Düse verbindet. Mit einer solchen Düsenanordnung läßt sich eine Backware mit einem Mittelstrang und darum gewendelten, verschiedenen Außensträngen herstellen.

Die Gestalt und Anzahl der Außenstränge sind durch die Form und Anzahl äußerer Düsen in einem großen Rahmen variierbar. Eine regelmäßige Gestalt entsteht, wenn mehrere äußere Düsen, durch die mehrere äußere Massen zuführbar sind, am Umfang der inneren Düse in gleichen Abständen verteilt angeordnet sind.

Vorteilhaft ist der Düsenträger mit der Düsenanordnung gemäß Anspruch 2 weitergebildet.

Die in dem Düsenträger ausgebildeten Ringräume sind gemäß Anspruch 3 im Längsschnitt abschnittsweise kreis- oder ellipsenförmig ausgebildet. Dadurch wird vermieden, daß die in den Ringraum hinein oder aus ihm heraus oder innerhalb des Ringraumes strömende Masse über mehr oder weniger scharfe Kanten strömt, die Turbulenzen in der Masse erzeugen würden. Ferner dienen die Ringräume als Druckausgleichsräume, so daß es möglich ist, die Massen gleichmäßig aus den Mündungen der äußeren Düsen ausströmen zu lassen, und man Backwaren mit genau gleicher äußerer Gestalt und gleichem Gewicht erhält.

Durch die Weiterbildungen gemäß den Ansprüchen 4 bis 6 läßt sich der Düsenträger an Merkmale der zähflüssigen Masse, wie Strömungsvolumen oder Zähigkeit, durch einfaches Austauschen von Wechselteilen anpassen.

Zum Antreiben des genannten Düsenträgers in einer Vorrichtung ist gemäß Anspruch 7 ein Zugmittelgetriebe, insbesondere ein Zahnriementrieb, oder ein Zahnradgetriebe mit sich kreuzenden Achsen vorgesehen, wobei in einer besonderen Gestaltung gemäß Anspruch 8 mehrere Düsenträger gleichzeitig antreibbar sind.

Eine bevorzugte Ausführungsform der Erfindung sieht gemäß Anspruch 9 vor, daß der/die Düsenträger in einem Winkel α von etwa 25° zur Vertikalen geneigt angeordnet ist/sind. Durch den geneigten Düsenträger trifft die austretende Masse schräg auf eine Unterlage, beispielsweise ein Transportband, und wird dadurch beim Wegbewegen weniger verformt, als dies der Fall wäre, wenn die Masse senkrecht austreten würde.

Ausführungsbeispiele erfindungsgemäßer Düsenträger und Vorrichtungen zum Extrudieren teigiger Massen werden im folgenden anhand schematischer Zeichnungen näher erläutert. Es zeigt:
- Fig. 1: eine erste Ausführungsform eines erfindungsgemäßen Düsenträgers im Längsschnitt,
- Fig. 2: ein erstes Beispiel einer mit dem in Fig.1 dargestellten Düsenträger erzeugten Backware in Seitenansicht,
- Fig. 3: den Querschnitt III-III in Fig.2,
- Fig. 4: ein zweites Beispiel einer mit der in Fig.1 dargestellten Düsenanordnung erzeugten Backware in Seitenansicht,
- Fig. 5: den Querschnitt V-V in Fig.4,
- Fig. 6: ein zweite Ausführungsform eines erfindungsgemäßen Düsenträgers im Längsschnitt,
- Fig. 7: einen erfindungsgemäßen Ringeinsatz eines in den Fig. 1 und 6 dargestellten Düsenträgers in geschnittener Vorderansicht,
- Fig. 8: den in Fig.7 mit IIX-IIX bezeichneten Schnitt, und
- Fig. 9: die in Fig.7 mit IX-IX bezeichnete Draufsicht.

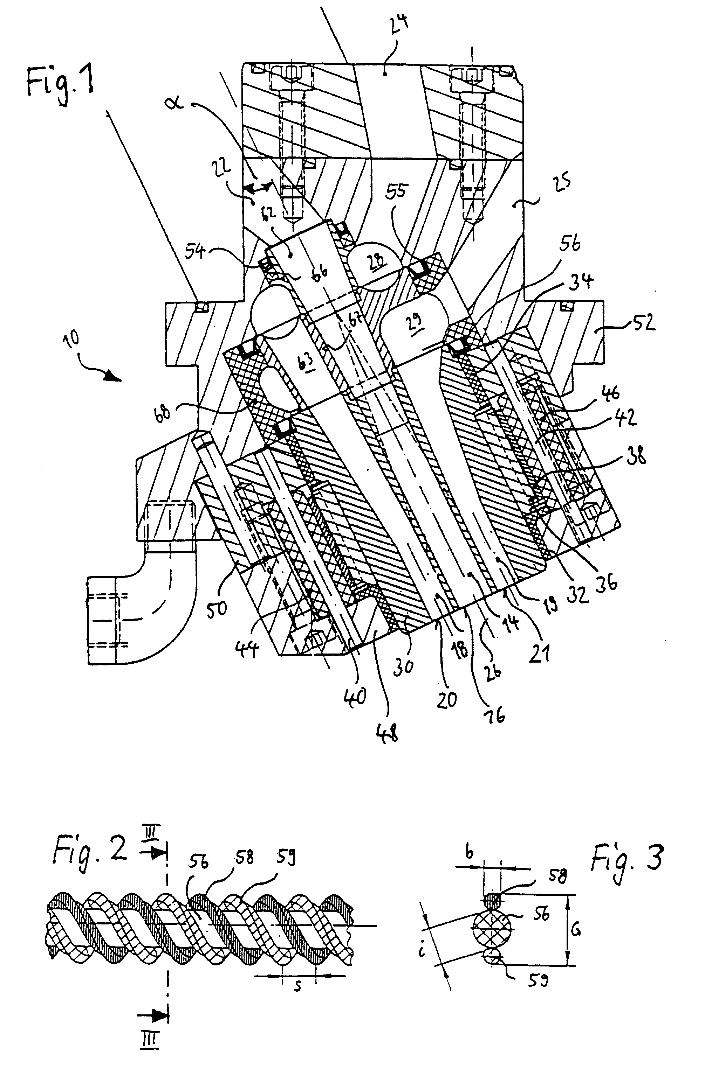

Fig.1 stellt eine erste Ausführungsform eines Düsenträgers 10 mit einer Düsenanordnung 12 dar, die ein innere Düse 14 mit einer Mündung 16 und zwei äußere Düsen 18 und 19 mit je einer Mündung 20 bzw. 21 umfaßt. Die Düsen sind in einem Rotor ausgebildet, der um eine Achse 26 der inneren Düse 14 drehbar ist. Die beiden Düsen 18 und 19 erstrecken sich parallel zur Achse 26.

In einem Stator ist ein innerer Zuführkanal 22 ausgebildet, durch den eine erste Masse 56 zur inneren Düse 14 zuführbar ist. Zwei äußere Zuführkanäle 24 und 25 führen zu den beiden äußeren Düsen 18 bzw. 19. Beim Extrudieren strömen durch die Zuführkanäle 22, 24, 25 drei Massen 56, 58 bzw. 59, die an den Mündungen 16, 20 bzw. 21 der Düsen 14, 18 und 19 zu einer Backware vereinigt werden.

Beim Extrudieren werden mit diesem Düsenträger Backwaren erzeugt, die einen Mittelstrang aus innerer Masse 56 und zwei darumgewendelte Stränge aus äußerer Masse 58 und 59 aufweisen. Dabei können die Stränge so gewendelt sein, daß die innere Masse 56 sichtbar, wie in Fig.2 und 4 dargestellt, oder auch nicht sichtbar ist.

Durch Anordnung je zweier erster und zweiter äußerer Düsen 18 bzw. 19 um eine innere Düse 14 ist eine wie in Fig.4 und 5 dargestellte Backware herstellbar. Die äußeren Düsen 18 und 19 sind dazu regelmäßig um den Umfang der inneren Düse angeordnet und liegen sich je paarweise gegenüber. Beipielhafte Maße für eine solche Backware sind ein Durchmesser i des inneren Strangs von etwa 9mm und ein Durchmesser b eines äußeren Strangs von etwa 4mm. Es entstehen Backwaren mit einem Gesamtdurchmesser G von etwa 17mm und einer Steigung s der gewendelten äußeren Stränge von etwa 8mm bis 12mm.

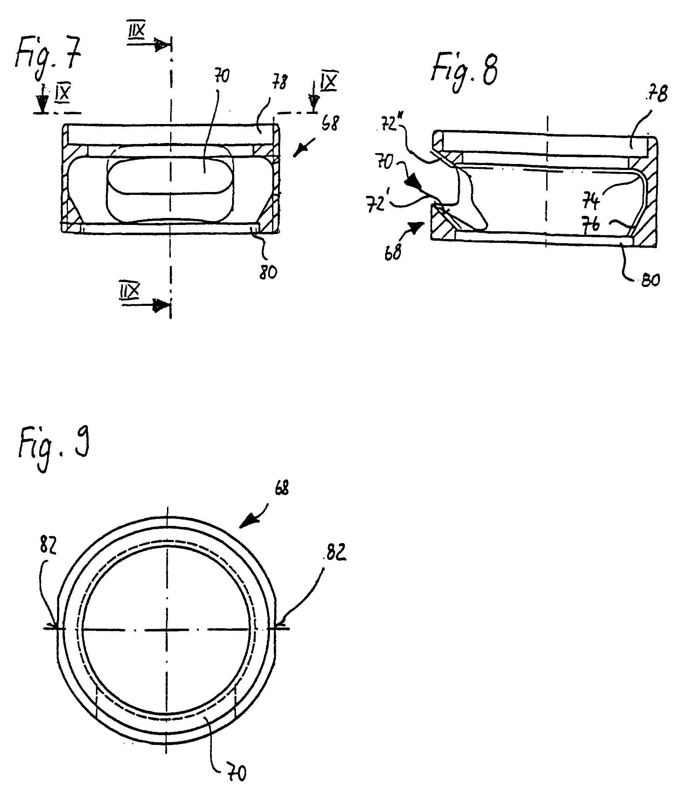

Der innere Zuführkanal 22 ist durch einen Verbindungskanal 62 in Einsätzen 66 und 67 des Rotors mit der inneren Düse 14 verbunden. Der erste äußere Zuführkanal 24 ist über einen Ringraum 28 und einen Verbindungskanal 63 im Einsatz 67 des Rotors mit der ersten äußeren Düse 18 verbunden. Der zweite äußere Zuführkanal 25 ist über einen Ringraum 29 mit der zweiten äußeren Düse 19 verbunden. Der Ringraum 29 ist im inneren Bereich durch den Einsatz 67 und im äußeren Bereich durch einen Ringeinsatz 68 gebildet, der in den Fig. 7 bis 9 dargestellt ist und unten näher erläutert wird.

Die äußeren Düsen 18 und 19 sind in einer Hülse 30 ausgebildet, die in zwei Gleitlagern 32 und 34 drehbar gelagert und dabei axial festgehalten ist. An der Hülse 30 ist eine Außenverzahnung 36 ausgebildet, mit dem ein Zahnriemen 38 in Eingriff ist. Der Zahnriemen 38 ist durch auf je einen Bolzen 40 bzw. 42 gelagerte Rollen 44 und 46 abgestützt. Die Gleitlager 32 und 34 und die Bolzen 40 und 42 sind an Gehäuseteilen 48 und 50 befestigt, die mit einem Gehäuseteil 52 des Stators verschraubt sind. Somit bilden die Hülse 30 und die Einsätze 66 und 67 einen Rotor, der relativ zu einem Stator drehbar ist, wobei der Stator die Gehäuseteilen 48, 50 und 52 umfaßt.

Der Rotor ist zum Stator durch Dichtungen 54, 55 und 56 abgedichtet. Die Dichtung 54 ist am Übergang des Zuführkanals 22 zum Einsatz 66 angeordnet. Sie dient sowohl zum Abdichten des inneren Zuführkanals 22 nach außen, als auch zum Abdichten des Ringraums 28. Die Dichtung 55 ist zwischen dem Ringraum 28 und dem Ringraum 29 angeordnet. Diese Dichtung 55 dichtet dadurch gleichzeitig zwischen beiden Ringräumen 28 sowie 29 und dem Stator ab und übernimmt dadurch eine doppelte Dichtwirkung. Die dritte Dichtung 56 ist zwischen der Hülse 30 und dem Ringraum 29 angeordnet.

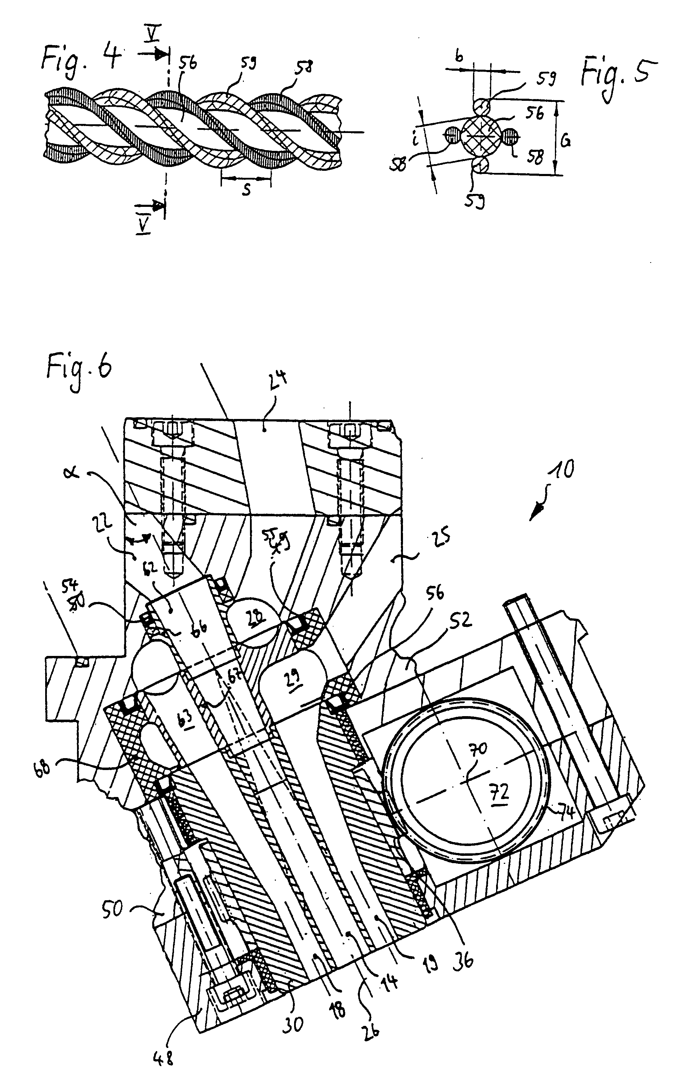

In Fig. 6 ist eine zweite Ausführungsform der Düsenanordnung 10 dargestellt, bei welcher die Hülse 30 des Rotors mit den Düsen 18 und 19 mittels eines Zahnradgetriebes mit sich kreuzenden Achsen 26 und 70 antreibbar ist. Hierzu ist in den Gehäuseteilen 48 und 50 eine Welle 72 drehbar gelagert, deren Achse 70 sich in einem Abstand zur Achse 26 rechtwinklig zu dieser erstreckt. Die Welle 72 weist an ihrem der Außenverzahnung 36 gegenüberliegenden Umfang eine Verzahnung 74 auf, die mit der Außenverzahnung 36 kämmt. Beispielsweise bilden beide Verzahnungen 36 und 74 ein Schraubradpaar. Die Außenverzahnung 36 und die Verzahnung 74 können alternativ auch als Kegelradpaar oder Schneckenradsatz ausgebildet sein.
Bei den in den Fig. 1 und 6 dargestellten Ausführungsformen können mehrere Düsenanordnungen 10 nebeneinander, insbesondere unmittelbar nebeneinander angeordnet sein. Die Achsen 26 der einzelnen Düsenanordnungen 10 sind dabei parallel zueinander angeordnet und die einzelnen Rotoren mittels eines gemeinsamen Zahnriemens 38 oder einer gemeinsamen Welle 72 antreibbar.
Durch die synchrone Drehung der Düsenanordnungen 10 entstehen beim Extrudieren mehrere gleichartig gewendelte Stränge, beispielsweise bis zu dreißig Stränge gleichzeitig.

In den Fig.1 und 6 ist auch die Art des Einbaus des Düsenträgers in einer Vorrichtung zum Extrudieren dargestellt. Der Düsenträger und damit die Achsen der Düsen 14, 18 und 19 sind in einem Winkel α von etwa 25° schräg zur Vertikalen angeordnet. Dadurch treffen die ausströmenden Massen schräg auf ein abförderndes Transportband (nicht dargestellt) und die dabei entstehende Verformung des Strangs kann gering gehalten werden.

In den Fig. 7 bis 9 ist der Ringeinsatz 68 dargestellt. Er weist eine Einlaßöffnung 70 für aus dem Zuführkanal 25 einströmende Masse auf. Zwei im bezogen auf die Fig.8 oberen und unteren Bereich der Einlaßöffnung 70 ausgebildete schräge Einlaßflächen 72' und 72" leiten die eintretende Masse nach unten. Die Masse strömt in den Ringraum 29, der zwischen dem im Stator eingebauten Ringeinsatz 68 und dem Einsatz 67 des Rotors entsteht. Die obere Ecke dieses Ringraum 29, also die bezogen auf die Fig. 8 obere Ecke 74 im Ringeinsatz 68 ist abgerundet, so daß sie im Längsschnitt kreis- oder ellipsenförmig ist. Die untere Seite 76 des Ringraums 29 bzw. des Ringeinsatzes 68 ist nach unten abgeschrägt, so daß die durch die schrägen Einlaßflächen 72' und 72 " eingeleitete Einströmrichtung der Masse beibehalten ist, ohne daß größere Turbulenzen auftreten.

Ferner weist der Ringeinsatz 68 am bezogen auf die Fig. 7 und 8 oberen und unteren Ende ringförmige Absätze 78 und 80 auf, in die Dichtungen 55 und 56 einsetzbar sind.

Um ein Verdrehen des im Stator eingesetzten Ringeinsatzes 68 zu verhindern, weist dieser an seinem Umfang zwei Abflachungen 82 auf.

## Patentansprüche

1. Düsenträger mit einer Düsenanordnung zum Extrudieren teigiger Massen, mit
- einer inneren Düse (14), die koaxial zu einer Drehachse (26) angeordnet ist, mit einer Mündung (16) zum Extrudieren einer inneren Masse (56), und
- zwei äußeren Düsen (18, 19), die gegen die innere Düse (14) achsversetzt angeordnet und um die Drehachse (26) drehbar sind, mit je einer Mündung (20; 21) zum Extrudieren einer äußeren Masse (58, 59), wobei
- der Düsenträger (10) zwei gegeneinander drehbare Teile aufweist, nämlich
-- einen Stator, in dem ein innerer Zuführkanal (22) sowie ein erster (24) und ein zweiter äußerer Zuführkanal (25) ausgebildet sind, und
-- einen Rotor, der die Düsen (14, 18, 19) trägt, im Stator drehbar gelagert ist und einen ersten Verbindungskanal (62) enthält, der den inneren Zuführkanal (22) mit der inneren Düse (14) verbindet,
**dadurch gekennzeichnet, daß**
- in mindestens einem der genannten gegeneinander drehbaren Teile ein erster Ringraum (28) und im Rotor ein zweiter Verbindungskanal (63) ausgebildet sind, die den ersten äußeren Zuführkanal (24) mit der ersten äußeren Düse (18) verbinden, und ein zweiter Ringraum (29) ausgebildet ist, der den zweiten äußeren Zuführkanal (25) mit der zweiten äußeren Düse (19) verbindet.

2. Düsenträger nach Anspruch 1,
**dadurch gekennzeichnet, daß** der Rotor gegenüber dem Stator durch eine erste (54), zweite (55) und dritte Dichtung (56) abgedichtet ist, wobei die erste Dichtung (54) den ersten Zuführkanal (22) abdichtet, die erste (54) und zweite Dichtung (55) den ersten Ringraum (28), und die zweite (55) und dritte Dichtung (56) den zweiten Ringraum (29) abdichten.

3. Düsenträger nach Anspruch 1 oder 2,
**dadurch gekennzeichnet, daß** der Ringraum (28, 29) im Längsschnitt abschnittsweise kreis- oder ellipsenförmig ist.

4. Düsenträger nach Anspruch 1, 2 oder 3,
**dadurch gekennzeichnet, daß** der erste Ringraum (28) in einem in Strömungsrichtung der Masse oberen Bereich durch den Stator und einen ersten Einsatz (66) des Rotors, und in einem unteren Bereich durch einen zweiten Einsatz (67) des Rotors gebildet ist.

5. Düsenträger nach Anspruch 4,
**dadurch gekennzeichnet, daß** der zweite Ringraum (29) in seinem radial äußeren Bereich durch einen im Stator angeordneten Ringeinsatz (68) und in seinem radial inneren Bereich durch den zweiten Einsatz (67) des Rotors gebildet ist.

6. Düsenträger nach Anspruch 4,
**dadurch gekennzeichnet, daß** der erste (62) und zweite Verbindungskanal (63) durch den ersten (66) und zweiten Einsatz (67) des Rotors gebildet sind.

7. Vorrichtung zum Extrudieren teigiger Massen,
**dadurch gekennzeichnet, daß** wenigstens ein Düsenträger nach einem der Ansprüche 1 bis 6 vorgesehen ist und der Rotor durch ein Zugmittelgetriebe, insbesondere einen Zahnriementrieb (36, 38), oder ein Zahnradgetriebe (36, 72, 74) mit sich kreuzenden Achsen (26, 70) antreibbar ist.

8. Vorrichtung nach Anspruch 7,
**dadurch gekennzeichnet, daß** mehrere Düsenträger (10) nebeneinander angeordnet und durch ein einziges Zugmittelgetriebe, insbesondere einen Zahnriementrieb (36, 38), oder ein einziges Zahnradgetriebe (36, 72, 74) mit sich kreuzenden Achsen (26, 70) antreibbar ist.

9. Vorrichtung nach Anspruch 7 oder 8,
**dadurch gekennzeichnet, daß** jeder Düsenträger (10) in einem Winkel α von etwa 25° zur Vertikalen geneigt angeordnet ist.

## Claims

1. A nozzle carrier having a nozzle arrangement for extruding doughy substances, comprising
- an inner nozzle (14), which is disposed coaxially with an axis of rotation (26) and has a mouth (16) for extruding an inner substance (56), and
- two outer nozzles (18, 19), which are disposed axially offset relative to the inner nozzle (14) and are rotatable about the axis of rotation (26) and each have a mouth (20; 21) for extruding an outer substance (58, 59), wherein
- the nozzle carrier (10) comprises two parts that are rotatable relative to one another, namely
-- a stator, in which an inner feed channel (22) as well as a first (24) and a second outer feed channel (25) are formed, and
-- a rotor, which carries the nozzles (14, 18, 19), is rotatably supported in the stator and contains a first connection channel (62) connecing the inner feed channel (22) to the inner nozzle (14),
**characterized in that**
- in at least one of the said parts that are rotatable relative to one another a first annular space (28) and in the rotor a second connection channel (63) are formed, which connect the first outer feed channel (24) to the first outer nozzle (18), and a second annular space (29) is formed, which connects the second outer feed channel (25) to the second outer nozzle (19).

2. The nozzle carrier according to claim 1,
**characterized in that** the rotor is sealed off relative to the stator by means of a first (54), second (55) and third seal (56), wherein the first seal (54) seals off the first feed channel (22), the first (54) and the second seal (55) seal off the first annular space (28), and the second (55) and the third seal (56) seal off the second annular space (29).

3. The nozzle carrier according to claim 1 or 2,
**characterized in that** the annular space (28, 29) in longitudinal section is in sections circular or elliptical in shape.

4. The nozzle carrier according to claim 1, 2 or 3,
**characterized in that** the first annular space (28) is formed in an, in flow direction of the substance, top region by the stator and a first insert (66) of the rotor, and in a bottom region by a second insert (67) of the rotor.

5. The nozzle carrier according to claim 4,
**characterized in that** the second annular space (29) is formed in its radially outer region by an annular insert (68) disposed in the stator and in its radially inner region by the second insert (67) of the rotor.

6. The nozzle carrier according to claim 4,
**characterized in that** the first (62) and the second connection channel (63) are formed by the first (66) and the second insert (67) of the rotor.

7. A device for extruding doughy substances
**characterized in that** at least one nozzle carrier according to one of claims 1 to 6 is provided and the rotor is drivable by means of a traction mechanism gearing, in particular a toothed belt drive (36, 38), or a toothed gearing (36, 72, 74) with intersecting axes (26, 70).

8. The device according to claim 7,
**characterized in that** a plurality of nozzle carriers (10) are disposed side by side and drivable by means of a single traction means gearing, in particular a toothed belt drive (36, 38), or a single toothed gearing (36, 72, 74) with intersecting axes (26, 70).

9. The device according to claim 7 or 8,
**characterized in that** each nozzle carrier (10) is disposed so as to be inclined at an angle α of about 25° to the vertical.

## Revendications

1. Porte-filières comportant un dispositif à filières pour l'extrusion de masses pâteuses, comportant
- une filière intérieure (14) qui est disposée coaxialement à un axe de rotation (26), comportant une embouchure (16) pour l'extrusion d'une masse intérieure (56), et
- deux filières extérieures (18, 19) qui sont disposées avec des axes décalés par rapport à la filière intérieure (14) et peuvent tourner autour de l'axe de rotation (26), et comportant chacune une embouchure (20; 21) pour l'extrusion d'une masse extérieure (58, 59),
dans lequel
- le porte-filières (10) comprend deux parties pouvant tourner l'une par rapport à l'autre, à savoir
-- un stator, dans lequel sont réalisés un canal intérieur d'amenée (22) ainsi qu'un premier canal extérieur d'amenée (24) et un second canal extérieur d'amenée (25), et
-- un rotor, qui porte les filières (14, 18, 19), est monté de manière à pouvoir tourner dans le stator et contient un premier canal de liaison (62), qui relie le canal d'amenée intérieur (22) à la filière intérieure (14),
**caractérisé en ce que**
- une première chambre annulaire (28) est formée dans au moins l'une desdites parties pouvant tourner en des sens opposés et un second canal de liaison (63) est formé dans le rotor, cette chambre et ce canal reliant le premier canal d'amenée extérieur (24) à la première filière extérieure (18), et qu'il est prévu une seconde chambre annulaire (29), qui relie le second canal d'amenée extérieur (25) à la seconde filière extérieure (19).

2. Porte-filières selon la revendication 1, **caractérisé en ce que** le rotor est étanchéifié par rapport au stator au moyen d'une première garniture d'étanchéité (54), d'une seconde garniture d'étanchéité (55) et d'une troisième garniture d'étanchéité (56), la première garniture d'étanchéité (54) fermant de façon étanche le premier canal d'amenée (22), la première garniture d'étanchéité (54) et la seconde garniture d'étanchéité (55) fermant de façon étanche la première chambre annulaire (28), et la seconde garniture d'étanchéité (55) et la troisième garniture d'étanchéité (56) fermant de façon étanche la seconde chambre annulaire (29).

3. Porte-filières selon la revendication 1 ou 2, **caractérisé en ce que** la chambre annulaire (28, 29) possède en coupe longitudinale par endroits une forme de cercle ou une forme d'ellipse.

4. Porte-filières selon la revendication 1, 2 ou 3, **caractérisé en ce que** la première chambre annulaire (28) est formée dans une partie supérieure dans la direction d'écoulement de la masse, par le stator et un premier insert (66) du rotor et, dans une partie inférieure, par un second insert (67) du rotor.

5. Porte-filières selon la revendication 4, **caractérisé en ce que** la seconde chambre annulaire (29) est formée, dans sa partie extérieure du point de vue radial, par un insert annulaire (68) disposé dans le stator et, dans sa partie intérieure du point de vue radial, par le second insert (67) du rotor.

6. Porte-filières selon la revendication 4, **caractérisé en ce que** le premier canal de liaison (62) et le second canal de liaison (63) sont formés par le premier insert (66) et le second insert (67) du rotor.

7. Dispositif pour l'extrusion de masses pâteuses, **caractérisé en ce qu'**il est prévu au moins un porte-filières selon l'une des revendications 1 à 6 et que le rotor peut être entraîné par un mécanisme à moyen de traction, notamment un mécanisme d'entraînement à courroie dentée (36, 38) ou un mécanisme à pignons (36, 72, 74) comportant des axes (26, 70) qui se croisent.

8. Dispositif à filières selon la revendication 7, **caractérisé en ce que** plusieurs porte-filières (10) sont disposés côte-à-côte et peuvent être entraînés par un seul mécanisme à moyen de traction, notamment un mécanisme d'entraînement à courroie dentée (36, 38), ou un seul mécanisme à pignons (36, 72, 74) ayant des axes (26, 70) qui se croisent.

9. Dispositif selon la revendication 7 ou 8, **caractérisé en ce que** chaque porte-filières (10) est incliné sous un angle α d'environ 25° par rapport à la verticale.
